# EUROPÄISCHE PATENTSCHRIFT

(11) **EP 3 563 116 B1**
(45) Veröffentlichungstag und Bekanntmachung des Hinweises auf die Patenterteilung: **29.03.2023**
(21) Anmeldenummer: 17821946.5
(22) Anmeldetag: 28.12.2017
(51) Int. Cl.: G01D 5/14

(54) **WEGSENSOR**
PATH SENSOR
CAPTEUR DE DISTANCE

(30) Priorität: 29.12.2016 DE 102016226301; 13.12.2017 DE 102017222676
(43) Veröffentlichungstag der Anmeldung: 06.11.2019
(73) Patentinhaber: Robert Bosch GmbH, 70442 Stuttgart (DE)
(72) Erfinder: WELSCH, Wolfgang, 69121 Heidelberg (DE); KLEINKNECHT, Michael, 74251 Lehrensteinsfeld (DE); KIMMERLE, Mathias, 71711 Steinheim (DE); FELLA, Sina, 74243 Langenbrettach (DE)
(86) Internationale Anmeldenummer: PCT/EP2017/084685
(87) Internationale Veröffentlichungsnummer: WO 2018/122286

(56) Entgegenhaltungen:
- EP-A2- 1 595 114
- DE-A1- 4 311 955
- DE-A1- 10 231 980
- DE-A1- 19 910 636
- DE-A1-102006 057 362
- DE-T5-112013 006 754
- GB-A- 2 506 698
- US-A1- 2009 174 396

## Beschreibung

Die Erfindung betrifft ein Verfahren zum Betreiben eines Wegsensors, der einen Messwertgeber und zumindest zwei dem Messwertgeber zugeordnete Sensoreinheiten aufweist, wobei der Messwertgeber relativ zu den Sensoreinheiten verlagerbar ist und eine sich entlang des Messwertgebers zumindest einem von einem Anfangswert bis zu einem Endwert verändernde Eigenschaft aufweist, die durch die Sensoreinheiten erfassbar ist/erfasst wird, und wobei in Abhängigkeit der durch die Sensoreinheiten erfassten Eigenschaftswerte der Eigenschaft die Position des Messwertgebers bezüglich der Sensoreinheiten bestimmt wird.

### Stand der Technik

Zum Überwachen oder Erfassen einer Linearbewegung oder einer Rotationsbewegung beziehungsweise eines dabei zurückgelegten Wegs ist es bekannt, magnetisch, induktiv oder kapazitiv arbeitende Sensoreinrichtungen zu verwenden. Diese weisen jeweils einen Messwertgeber auf, der mit dem Element, dessen Stellung oder Position zu erfassen ist, fest verbunden ist, sowie ein oder mehrere Sensoreinheiten, die die Position oder Stellung des Messwertgebers magnetisch, induktiv oder kapazitiv überwachen. Weil der Messwertgeber eine sich in Bewegungsrichtung beziehungsweise Verlagerungsrichtung verändernde Eigenschaft aufweist, ist mittels der Sensoreinheiten eine eindeutige Position des Messwertgebers feststellbar, sofern sich die Eigenschaft entlang des Bewegungswegs derart verändert, dass jeder Eigenschaftswert der Eigenschaft nur einmal auftritt. Dadurch ist eine einfache Erfassung der Stellung des Messwertgebers und damit der zu überwachenden Einrichtung gewährleistet.

Nachteilig mit den bekannten Wegsensoren ist es, dass aufgrund der Anforderung des eindeutigen Eigenschaftswerts der Bewegungsbereich des Messwertgebers begrenzt ist.

Die Offenlegungsschrift DE 199 10 636 A1 offenbart einen Wegsensor mit einem Messwertgeber, der in Form einer Schraubenlinie mit in Bewegungsrichtung des Messwertgebers abnehmender Periode magnetisiert ist. Außerdem weist der Wegsensor zwei in Bewegungsrichtung hintereinander angeordnete Magnetfeldsensoren auf, die dazu ausgebildet sind, jeweils einen Winkelwert der Magnetfeldrichtung des Magnetfeldes des Messwertgebers zu erfassen. Die Position des Messwertgebers wird in Abhängigkeit von einer Differenz der erfassten Winkelwerte bestimmt. Die Offenlegungsschrift US 2009 174 396 A1 befasst sich mit induktiven Wegsensoren. Die Offenlegungsschrift DE 10 2006 057 362 offenbart einen Wegsensor, der einen magnetischen Messwertgeber und zwei Sensoreinheiten aufweist, wobei eine der Sensoreinheiten Polteilungen des Messwertgebers erfasst und die andere die absolute magnetische Flussdichte. Die Offenlegungsschrift DE 43 11 955 A1 offenbart ein Verfahren zur Abstandsmessung unter Nutzung eines Magnetmaßstabes und eines im zu messenden Abstand parallel zur Maßstabsoberfläche vorhandenen Magnetfeldsensors. Die Offenlegungsschrift DE 102 31 980 A1 offenbart einen Wegsensor mit einem Messwertgeber, der eine erste Geberanordnung und eine zweite Geberanordnung aufweist. Die Geberanordnungen sind in Bewegungsrichtung des Messwertgebers nebeneinander angeordnet. Ein Wegsensor mit einem mehrere Geberanordnungen aufweisenden Messwertgeber ist auch aus der Offenlegungsschrift GB 2506698 A bekannt. Die Offenlegungsschrift DE 11 2013 006 754 T5 offenbart eine Aufzugskabinenposition-Erfassungsvorrichtung. Die Offenlegungsschrift EP 1 595 114 A2 offenbart einen weiteren Wegsensor.

### Offenbarung der Erfindung

Weist der Messwertgeber zumindest zwei in Bewegungsrichtung hintereinanderliegende Abschnitte auf, entlang welcher sich die Eigenschaft jeweils von zumindest dem Anfangswert bis zu wenigstens dem Endwert verändert, wobei die Veränderung in den Abschnitten unterschiedliche Steigungen aufweist, so kann der Messweg beziehungsweise der zu erfassende Bewegungsweg des Messwertgebers gegenüber bekannten Lösungen deutlich verlängert werden kann. Wie bereits vorstehend erläutert, verändert sich die zu erfassende Eigenschaft in Richtung der Bewegung des Messwertgebers von einem Anfangswert bis zu einem Endwert. Damit weist die Eigenschaft durch die Veränderung eine Steigung auf, die durch die Sensoreinheiten erfassbar ist. Die Steigung der Veränderung ergibt sich aus der Veränderung der Eigenschaft pro Wegeinheit entlang des Messwertgebers (in Bewegungsrichtung des Messwertgebers gesehen). Es ergibt sich hieraus eine von dem Wegsensor erfassbare Kennlinie (Eigenschaftswert über Längserstreckung des Messwertgebers), welche diese Steigung widerspiegelt. Unter Berücksichtigung beziehungsweise Ermittlung der vorliegenden Steigung wird dabei erreicht, dass zwischen mehreren Abschnitten des Messwertgebers in Bewegungsrichtung unterschieden werden kann. Dadurch, dass die Messwertgeber in Bewegungsrichtung unterschiedliche Steigungen der Eigenschaft aufweist, ist in Abhängigkeit der aktuell erfassten Steigung und des aktuell erfassten Eigenschaftswerts ermittelbar, an welcher Position oder in welcher Stellung sich der Messwertgeber genau befindet, auch dann, wenn der jeweilige Eigenschaftswert mehrfach in der Gesamterstreckung des Messwertgebers auftritt. Voraussetzung hierfür ist, dass ein Eigenschaftswert, der mehrfach entlang der Bewegungsrichtung des Messwertgebers auftritt, in Abschnitten des Messwertgebers liegt, die unterschiedliche Steigungen aufweisen, sodass eine eindeutige Zuordnung eines erfassten Eigenschaftswerts zu einer Steigung und damit eines Abschnitts des Messwertgebers gewährleistet ist. Somit erlaubt es der Wegsensor, dass mehrere Abschnitte am Messwertgeber vorhanden sind, innerhalb welcher sich die Eigenschaft unterschiedlich verändert, wobei in jedem Abschnitt ein Eigenschaftswert jeweils einmal vorkommen kann. Damit kann die Eigenschaft sich beispielsweise entlang des jeweiligen Abschnitts stets gleich verändern, also von dem gleichen Ausgangswert bis zu dem gleichen Endwert, jedoch über eine unterschiedlich lange Wegstrecke, sodass eine unterschiedliche Steigung der Veränderung der Eigenschaft vorliegt. Bevorzugt weisen die Abschnitte jeweils die gleichen Anfangswerte und die gleichen Endwerte auf, sodass sich die Eigenschaft wiederholend verändert. Alternativ können jedoch Anfangs- und/oder Endwerte auch voneinander abweichen. In jedem Fall werden aufgrund der unterschiedlichen Steigungen überlappende Wertebereiche benachbarter Abschnitte ermöglicht, die durch die unterschiedliche Steigung voneinander unterschieden werden können.

Gemäß einer bevorzugten Ausführungsform des Wegsensors ist außerdem vorgesehen, dass sich die Eigenschaft in zumindest einem in Bewegungsrichtung liegenden Abschnitt des Messwertgebers nicht verändert. Hierdurch entsteht ein sogenannter Klemmbereich, innerhalb dessen sich der Sensorwert des Wegsensors nicht verändert. Der Klemmbereich kann beispielsweise an einem Ende des Messwertgebers oder beispielsweise zwischen zwei Abschnitten mit unterschiedlichen Steigungen liegen.

Weiterhin ist bevorzugt vorgesehen, dass die Sensoreinheiten des Wegsensors in Bewegungsrichtung des Messwertgebers gesehen hintereinanderliegend angeordnet sind. Dadurch ist eine einfache und sichere Erfassung der Steigung mittels der Sensoreinheiten beispielsweise auch im Stillstand des Messwertgebers sicher gewährleistet.

Vorzugsweise weist der Messwertgeber als Eigenschaft ein Magnetfeld mit einer sich in Bewegungsrichtung des Messwertgebers verändernden Ausrichtung auf, wobei die Sensoreinheiten zum Erfassen der Magnetfeldausrichtung ausgebildet sind. Das verändernde Magnetfeld wird hiermit als Eigenschaft des Messwertgebers genutzt, um magnetisch die Stellung des Messwertgebers relativ zu den Sensoreinheiten zu bestimmen. Grundsätzlich sind magnetisch arbeitende Wegsensoren bekannt, sodass hier auf bekannte Technologien zurückgegriffen werden kann. Im Unterschied zu bekannten Lösungen wird lediglich zusätzlich zu dem eigentlichen Eigenschaftswert auch die Steigung der Veränderung der Ausrichtung des Magnetfelds erfasst und mitausgewertet, um eine eindeutige Positionsbestimmung des Messwertgebers, wie zuvor beschrieben, zu gewährleisten.

Gemäß einer ersten Ausführungsform ist der Messwertgeber bevorzugt verschiebbar gelagert, sodass der Wegsensor als Linearwegsensor realisiert ist.

Alternativ ist der Messwertgeber drehbar gelagert, sodass sich ein Rotationssensor ergibt, der beispielsweise zum Erfassen von Drehwinkeln geeignet ist.

Gemäß einer bevorzugten Ausführungsform weist der Messwertgeber einen insbesondere helikal aufmagnetisierten Permanentmagneten auf. Hierdurch ergibt sich ein einstückiger Messwertgeber, der einfach zu handhaben und zu montieren ist.

Alternativ weist der Messwertgeber bevorzugt mehrere in Bewegungsrichtung aneinander anliegende Permanentmagnete auf. Hierdurch sind mehrere Abschnitte mit unterschiedlichen Steigungen der sich verändernden Magnetfeldausrichtung realisierbar, insbesondere in dem Permanentmagneten mit unterschiedlichen Längserstreckungen, in Bewegungsrichtung gesehen, verwendet werden.

Gemäß einer alternativen Ausführungsform des Wegsensors ist bevorzugt vorgesehen, dass die Sensoreinheiten jeweils zumindest eine Induktionsspule aufweisen, und dass der metallisch ausgebildete Messwertgeber als Eigenschaft eine sich in Bewegungsrichtung verändernde Breite aufweist. Durch diese Ausführungsform wird eine induktive Erfassung der Stellung des Messwertgebers erreicht. Auch hier sind mehrere Abschnitte entlang des Messwertgebers vorgesehen, die eine unterschiedliche Steigung der Breitenveränderung (Eigenschaft) aufweisen, sodass eine eindeutige Bestimmung der Position des Messwertgebers gewährleistet ist.

Gemäß einer weiteren alternativen Ausführungsform ist bevorzugt vorgesehen, dass die Sensoreinheiten als kapazitive Sensoreinheiten ausgebildet sind, und dass der metallisch ausgebildete Messwertgeber als Eigenschaft eine sich in Bewegungsrichtung verändernde Breite aufweist. Anstelle eines induktiven Messprinzips wird in diesem Fall also ein kapazitives Messprinzip realisiert. Im Ergebnis ergeben sich die zuvor bereits genannten Vorteile für das Erfassen der eindeutigen Position des Messwertgebers und der Möglichkeit, besonders große Messwege zu realisieren.

Das erfindungsgemäße Verfahren mit den Merkmalen des Anspruchs 1 zeichnet sich dadurch aus, dass mittels der Sensoreinheiten jeweils ein Eigenschaftswert der Eigenschaft erfasst und eine Steigung der Veränderung der Eigenschaft insbesondere in Abhängigkeit der erfassten Eigenschaftswerte entlang des Messwertgebers bestimmt wird, wobei der Messwertgeber in Bewegungsrichtung gesehen zumindest zwei hintereinanderliegende Abschnitte aufweist, innerhalb derer die Steigungen der Veränderung verschieden sind, und wobei in Abhängigkeit von den erfassten Eigenschaftswerten und der ermittelten Steigung die Position des Messwertgebers relativ zu den Sensoreinheiten bestimmt wird. Es ergeben sich hierdurch die zuvor bereits genannten Vorteile.

Insbesondere ist vorgesehen, dass die Eigenschaft magnetisch, induktiv oder kapazitiv ermittelt wird. Je nach Anwendungsfall und Randbedingungen kann sich eine der Varianten als vorteilhaft herausstellen. Bevorzugt wird die Position des Messwertgebers absolut und/oder durch eine differentielle Messung erfasst. Bei der absoluten Messung wird ein Eigenschaftswert erfasst, welcher bereits die Ausgangsgröße der Sensoreinheit bestimmt. Bei einer differentiellen Messung wird hingegen dieselbe Messgröße durch zwei Sensoren oder Sensoreinheiten an zwei unterschiedlichen Orten erfasst, sodass sich unterschiedliche Eigenschaftswerte ergeben können. Die erfassten Eigenschaftswerte werden dann voneinander abgezogen (Differenzbildung) und erst dann in die Ausgangsgröße der Sensoreinheit beziehungsweise des Wegsensors umgewandelt. Durch dieses Prinzip ist der Wegsensor besonders robust gegenüber Störfeldern oder homogenen Störungen der Messgröße, da diese aufgrund der Differenzbildung nicht in die Ausgangsgröße eingehen.

Im Folgenden soll die Erfindung anhand der Zeichnung näher erläutert werden. Dazu zeigen
- Figuren 1A und 1B: ein erstes Ausführungsbeispiel eines vorteilhaften Wegsensors,
- Figuren 2A bis 2C: ein zweites Ausführungsbeispiel des vorteilhaften Wegsensors,
- Figuren 3A und 3B: ein drittes Ausführungsbeispiel des vorteilhaften Wegsensors,
- Figur 4: ein viertes Ausführungsbeispiel des vorteilhaften Wegsensors und
- Figur 5: ein fünftes Ausführungsbeispiel des vorteilhaften Wegsensors.

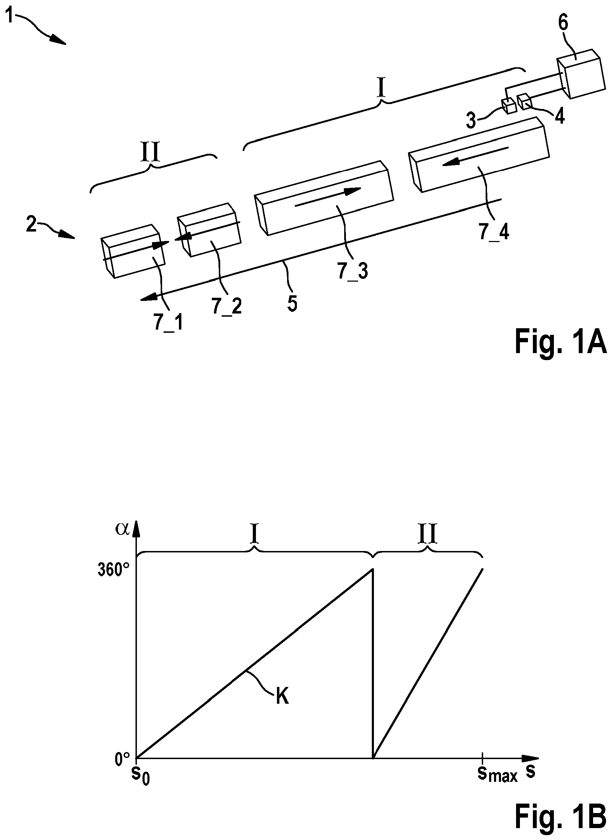

Figur 1A zeigt in einer vereinfachten perspektivischen Darstellung einen vorteilhaften Wegsensor 1, der berührungsfrei die Position oder Stellung eines Messwertgebers 2 mithilfe von zwei Sensoreinheiten 3, 4 erfasst, wobei der Messwertgeber 2 beispielsweise mit einem Aktuatorelement, dessen Schiebeposition zu überwachen ist, fest verbunden ist. Der Messwertgeber 2 ist längsverschieblich gelagert, wie durch einen Pfeil 5 gezeigt. Weiterhin weist der Messwertgeber 2 eine von den Sensoreinheiten 3, 4 erfassbare Eigenschaft auf, mittels derer die Position des Messwertgebers 5 zu den Sensoreinheiten 3, 4 ermittelbar ist. Die Sensoreinheiten 3, 4 sind mit einer Auswerteeinrichtung 6 verbunden, welche in Abhängigkeit der Ausgangssignale der Sensoreinheiten 3, 4 die Position des Messwertgebers 2 bestimmt.

Gemäß dem vorliegenden Ausführungsbeispiel ist vorgesehen, dass der Messwertgeber 5 als magnetischer Messwertgeber ausgebildet ist. Dazu weist der Messwertgeber 2 mehrere Permanentmagnete 7_1 bis 7_4 auf, die in Bewegungsrichtung gemäß Pfeil 5 gesehen hintereinanderliegend angeordnet sind und abwechselnd eine unterschiedliche Polarität aufweisen, wie durch Pfeile gezeigt. Dabei sind die Permanentmagneten 7_1 bis 7_4 derart angeordnet, dass sich ein schrittweise drehendes Magnetfeld ergibt. Dabei ist gemäß dem vorliegenden Ausführungsbeispiel vorgesehen, dass sich das Magnetfeld in einer Ebenen dreht, die in der Verschieberichtung beziehungsweise parallel zur Verschieberichtung gemäß Pfeil 5 liegt.

Die Sensoreinheiten 3, 4 weisen jeweils magnetfeldempfindliche Sensoren auf, die beispielsweise als Hall-Sensoren oder als XMR-(AMR, GMR oder TMR) Sensoren ausgebildet sind, die Magnetfeldkomponenten erfassen, die in eine vorbestimmte Richtung wirken. Die Sensoreinheiten 3, 4 sind insbesondere dazu ausgebildet, das Magnetfeld des Messwertgebers 2 zu erfassen und anhand der Magnetfeldkomponenten, die sich mit dem Magnetfeld drehen, zu ermitteln, an welcher Position sich die Messwertgeber 2 befindet.

Vorliegend sind zwei Magnetpolpaare 7_1, 7_2 und 7_3 und 7_4 vorhanden, sodass bei einer Bewegung des Messwertgebers 2 aus seiner Ausgangsstellung in seine Endstellung gemäß Pfeil 5 zwei Mal das Durchlaufen eines magnetischen Winkels von 360° durch die Sensoreinheiten 3, 4 erfassbar ist. Damit erfassen die Sensoreinheiten 3, 4 zwei Mal die gleichen Eigenschaftswerte der Eigenschaft (Magnetfeldausrichtung) des Messwertgebers. Um zu gewährleisten, dass dennoch eine eindeutige Positionsbestimmung möglich ist, weist der Messwertgeber 2 zwei durch die Permanentmagneten 7_1 bis 7_4 gebildete Abschnitte I und II auf, innerhalb derer die Veränderung der Magnetausrichtung eine unterschiedliche Steigung aufweist.

Dies wird vorliegend dadurch erreicht, dass das erste Magnetpolpaar 7_1 und 7_2 in Verschiebrichtung länger ausgebildet ist, als das zweite Magnetpolpaar 7_3 und 7_4. Damit dreht sich das Magnetfeld in dem ersten Abschnitt I bei gleichbleibender Bewegungsgeschwindigkeit des Messwertgebers 2 langsamer als im zweiten Abschnitt II.

Figur 1B zeigt hierzu in einem Diagramm die sich aus dem Wegsensor 1 ergebende und von den Sensoreinheiten 3, 4 erfasste Kennlinie K über die Wegstrecke von der Ausgangsposition s₀ bis zur maximalen Endposition sₘₐₓ, dabei wird der magnetische Winkel von 0° bis 360° zwei Mal durchlaufen. Es zeigt sich, dass in dem ersten Abschnitt I die Drehung des Magnetfelds langsamer stattfindet, bezogen auf die Wegstrecke, als im Abschnitt II.

Die Auswerteeinrichtung 6, welche die von den Sensoreinheiten 3, 4 ermittelten Eigenschaftswerte des Messwertgebers 2 auswertet, ermittelt in Abhängigkeit der Eigenschaftswerte der Sensoreinheiten 3, 4 die Steigung der Kennlinie K. Dies ist aufgrund der in Bewegungsrichtung hintereinanderliegenden Anordnung der Sensoreinheiten 3, 4 durch eine einfache Umrechnung möglich. In dem vorliegenden Fall erkennt die Auswerteeinrichtung 6 in dem ersten Abschnitt I eine kleinere Steigung als im zweiten Abschnitt II. Unter Berücksichtigung der aktuell vorliegenden Steigung und der erfassten Eigenschaftswerte ist somit eine eindeutige Bestimmung der Position des Messwertgebers 2 gewährleistet, weil der jeweils erfasste Eigenschaftswert einer der Steigungen und damit einem der Abschnitte des Messwertgebers 2 zuordenbar ist.

Während gemäß dem vorliegenden Ausführungsbeispiel lediglich zwei Abschnitte I und II mit unterschiedlichen Steigungen vorhanden sind, können grundsätzlich beliebig viele Abschnitte mit unterschiedlichen Steigungen vorgesehen sein.

Erfindungsgemäß wird die Steigung beispielsweise durch ein Vergleich der von beiden Sensoreinheiten 3, 4 erfassten Eigenschaftswerte bestimmt. Aufgrund der beabstandeten Anordnung der Sensoreinheiten 3, 4 in Bewegungsrichtung hintereinanderliegend, ist die Steigung mit einer einfachen Berechnung ermittelbar.

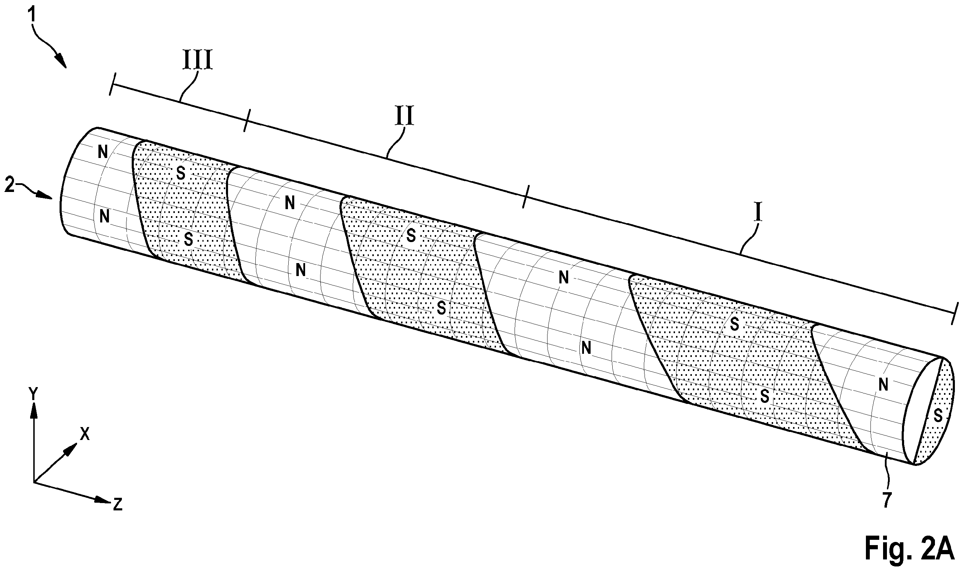

Figur 2A zeigt ein zweites Ausführungsbeispiel des Wegsensors 1, wobei aus dem vorhergehenden Ausführungsbeispiel bereits bekannte Elemente mit den gleichen Bezugszeichen versehen sind und insofern auf die obenstehende Beschreibung verwiesen wird. Im Folgenden soll im Wesentlichen nur auf die Unterschiede eingegangen werden.

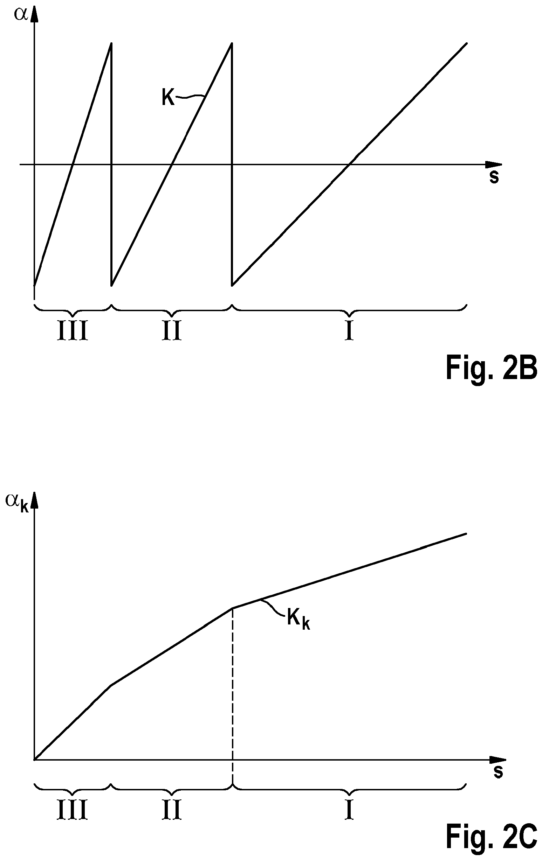

Im Unterschied zu dem vorhergehenden Ausführungsbeispiel ist gemäß dem zweiten Ausführungsbeispiel vor allem vorgesehen, dass der Wegsensor 2 nicht mehrere Permanentmagnete 7_1 bis 7_2, sondern einen einzigen Permanentmagneten 7 aufweist, der helikal aufmagnetisiert wurde. Daraus ergibt sich ein Magnetfeld des Messwertgebers 2, das sich nicht nur in einer Ebene parallel zur Schieberichtung, sondern nunmehr auch in einer Ebene senkrecht zur Verschieberichtung dreht. Dabei sind auch gemäß dem vorliegenden Ausführungsbeispiel unterschiedliche Steigungen bei der Drehung des Magnetfelds, also der Drehung der Magnetfeldausrichtung als Eigenschaft des Messwertgebers 2 vorhanden. Vorliegend weist der Permanentmagnet 7 drei Abschnitte I, II und III auf, innerhalb derer die Magnetfelddrehung unterschiedlich schnell, bezogen auf den Verschiebeweg, erfolgt. Ähnlich wie bei dem ersten Ausführungsbeispiel wird dies dadurch erreicht, dass die Polabschnitte des Permanentmagneten 7 im ersten Abschnitt I länger sind als im zweiten Abschnitt II, und im zweiten Abschnitt II länger als im dritten Abschnitt III. Es ergibt sich dadurch die in Figur 2B gezeigte Kennlinie mit unterschiedlichen Steigungen in den Abschnitten I, II und III.

Während gemäß dem Ausführungsbeispiel von Figur 1 lediglich zwei Abschnitte I und II mit unterschiedlichen Steigungen vorhanden sind, können gemäß dem zweiten Ausführungsbeispiel beliebig viele Abschnitte mit unterschiedlichen Steigungen vorgesehen sein. Gemäß einer besonders bevorzugten Ausführungsform weist zumindest einer der Abschnitte, der am Ende oder auch zwischen zwei benachbarten Abschnitten mit unterschiedlichen Steigungen liegen kann, eine Steigung von Null beziehungsweise keine Steigung auf, sodass sich der Eigenschaftswert des Messwertgebers 2 in diesem Abschnitt nicht verändert. Dadurch wird ein sogenannter Klemmabschnitt oder Klemmbereich zur Verfügung gestellt, innerhalb dessen bei einem Bewegen des Messwertgebers 2 keine Veränderung des Sensorsignals erfolgt.

Figur 2C zeigt eine kumulierte Kennlinie, bei welcher die Steigungen in eine gemeinsame Kennlinie eingetragen und mitberücksichtigt sind. Die so vorhandene Kennlinie ist eindeutig für die Position des Messwertgebers 2 relativ zu den Sensoreinheiten 3, 4, sodass durch ein einfaches Ablesen der Kennlinie die genaue Position des Messwertgebers 2 eindeutig bestimmbar ist. Damit werden Messungen über 360° magnetische Winkel in vorteilhafter Weise ermöglicht.

Um den Einfluss von externen Störfeldern zu reduzieren, ist außerdem erfindungsgemäß vorgesehen, dass die Sensoreinheiten 3, 4 zumindest eine gleiche Messgröße erfassen, um durch eine Differenzwertbildung den Einfluss des externen Störfelds herauszurechnen. Ist dies nicht notwendig, kann auch eine absolute Messung erfolgen, bei der auf eine Differenzwertbildung verzichtet wird.

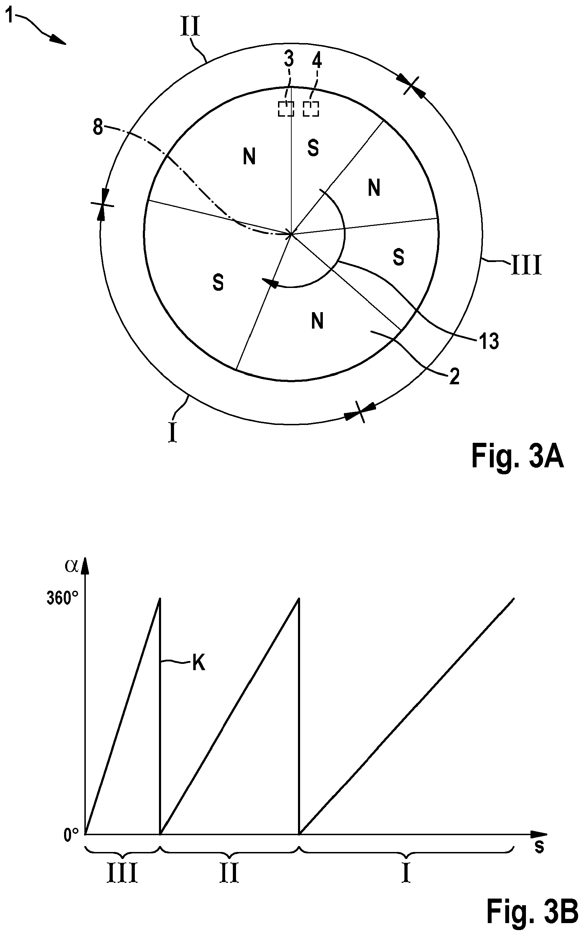

Figur 3A zeigt ein drittes Ausführungsbeispiel des Wegsensors 1. Im Unterschied zu den vorhergehenden Ausführungsbeispielen ist nunmehr vorgesehen, dass der Messwertgeber 2 nicht verschiebbar, sondern um eine Drehachse 8 verdrehbar gelagert ist, wie durch einen Pfeil 12 gezeigt. In Bewegungsrichtung gesehen, also in Umfangsrichtung gemäß dem vorliegenden Ausführungsbeispiel, weist der Messwertgeber 2 erneut die drei Abschnitte I, II und III auf, die sich durch unterschiedlich weit über den Bewegungsweg erstreckende Magnetpolpaare beziehungsweise Magnetpole N, S ergeben. Auch hierdurch ergibt sich beim Durchlaufen des jeweiligen Abschnitts I, II und III eine Kennlinie, wie sie in Figur 3B gezeigt ist. Diese entspricht zumindest im Wesentlichen der Kennlinie aus Figur 2B. Somit ist die gleiche Sensorgenauigkeit und Möglichkeit auch bei einem drehenden Messwertgeber 2 gegeben. Auch hier kann diese Kennlinie K zu einer kumulierten Kennlinie zusammengeführt werden. In Figur 3B ist erkennbar, dass sich aufgrund der unterschiedlich gestalteten Abschnitte I, II und III unterschiedliche Steigungen der Kennlinie ergeben, die zur Bestimmung der Drehwinkelposition des Messwertgebers 2 berücksichtigt werden können. In Abhängigkeit der Steigung und der aktuell erfassten Eigenschaftswerte ergibt sich somit eine eindeutige Positionsbestimmung.

Die Sensoreinheiten 3, 4 befinden sich bei dem dritten Ausführungsbeispiel bevorzugt in einer Ebene oberhalb der Zeichnung, wie durch gestrichelte Linien in Figur 3A gezeigt. Durch die vorteilhafte Ausbildung können vorliegend beispielsweise Abschnitte oder Bereiche des Messwertgebers 2 geschaffen werden, die eine unterschiedliche Sensibilität bei der Messung beziehungsweise der Positionsbestimmung bieten. Auch ohne den Messwertgeber 2 in eine bekannte Ausgangsposition bewegen zu müssen, ist durch eine einfache Messung die aktuelle Position des Messwertgebers 2 aufgrund der Berücksichtigung der Steigung gewährleistet.

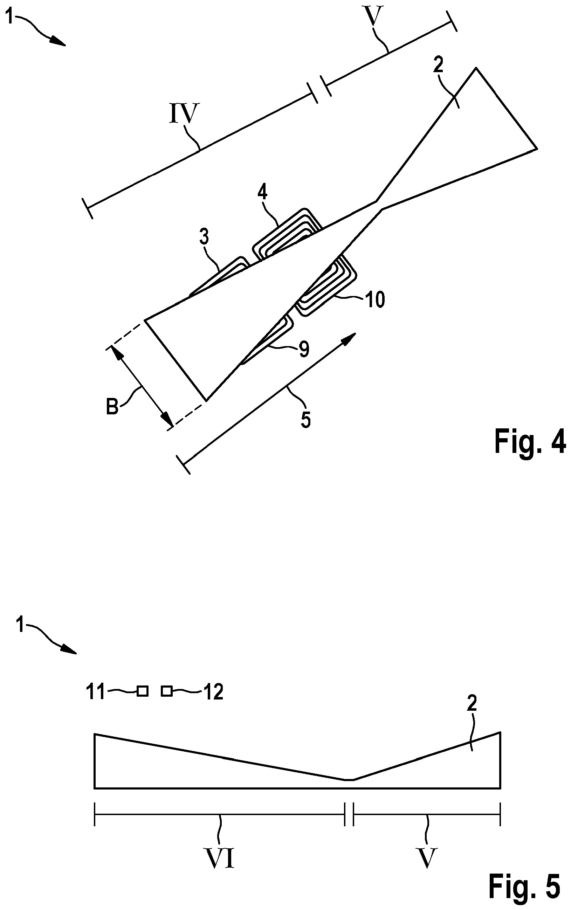

Figur 4 zeigt ein viertes Ausführungsbeispiel des Wegsensors 1, das sich von den vorhergehenden Ausführungsbeispielen dadurch unterscheidet, dass die Sensoreinheiten 3, 4 nicht ein magnetisches Feld erfassen, sondern als induktive Sensoren jeweils eine Induktionsspule 9, 10 aufweisen, die erfindungsgemäß in Bewegungsrichtung des Messwertgebers 2 hintereinanderliegend angeordnet sind. Bei dem vorliegenden Wegsensor 1 ist der Messwertgeber 2, wie in den ersten beiden Ausführungsbeispielen beschrieben, linear verschiebbar gelagert und weist eine sich über seine Längserstreckung beziehungsweise in Bewegungsrichtung gemäß Pfeil 5 verändernde Breite B auf. Der Messwergeber 2 verändert durch den Abdeckungsgrad der Induktionsspule 9, 10 deren Induktivität, welche dann detektiert und ausgewertet wird. Bei der beispielhaften Ausführung gemäß Figur 4 ergibt sich eine Kennlinie, die in einem ersten Abschnitt IV fällt und in einem darauffolgenden zweiten Abschnitt V steigt. Durch das Verwenden der zweiten Induktionsspule 10 ist nunmehr die Position des Messwertgebers 2 eindeutig feststellbar, indem die Steigung der Kennlinie berücksichtigt wird. Es können dabei auch mehrere Abschnitte mit unterschiedlichem Betrag der Steigung hintereinander angefügt werden. Insbesondere sind in Figur 4 zwei Abschnitte mit Steigungen gezeigt, die entgegengesetzte Vorzeichen aufweisen, wodurch sich Vorteile bei der Auswertung ergeben. Während gemäß dem vorliegenden Ausführungsbeispiel der Wegsensor 1 als Linearwegsensor ausgebildet ist, kann die Messwertgeberstruktur 2 auch auf den Außenumfang oder Umfang eines rotierenden Messwertgebers 2, wie er beispielsweise in Figur 3A gezeigt ist, aufgebracht oder aufgewickelt werden. Sind die Sensoreinheiten 3, 4 dann dem Umfang des drehenden Messwertgebers 2 zugeordnet, ist auch hier eine eindeutige Positionsbestimmung möglich.

Figur 5 zeigt ein weiteres Ausführungsbeispiel des Wegsensors 1, das sich von dem vorhergehenden Ausführungsbeispiel von Figur 4 dadurch unterscheidet, dass der Messwertgeber 2 aus metallischem Werkstoff hergestellt ist, und die Sensoreinheiten 3, 4 kapazitive Sensoren 11 und 12 aufweisen. Durch die unterschiedlichen Steigungen in den Abschnitten IV und V, die wie im Ausführungsbeispiel von Figur 4 gegensätzlich ausgerichtet sind, ist eine eindeutige Positionsbestimmung, wie zuvor beschrieben, gewährleistet. Auch dieses Konzept kann in der zuvor beschriebenen Art auf einen Drehwinkelsensor mit einem drehbar gelagerten Messwertgeber 2 oder Grundkörper für einen Messwertgeber übertragen werden.

Die vorliegenden Ausführungsbeispiele haben gemeinsam, dass durch die Auswertung der Steigung der Kennlinie und aus der Information der erfassten Eigenschaftswerte eine eindeutige Positionsbestimmung beziehungsweise eine eindeutige Ausgangsgröße des Wegsensors 1 gewährleistet ist. Dabei sind unterschiedliche Messprinzipien denkbar.

Gemäß einem ersten Messprinzip, wie vorstehend bereits erläutert, wird eine absolute Messung durchgeführt. Durch die zwei Sensoreinheiten wird entlang der Wegstrecke gemessen, in welcher der Messwertgeber bewegt wird. Somit entspricht die Differenz ihrer Ausgangssignale (bei bekanntem Abstand der Messsensoren beziehungsweise Sensoreinheiten 3, 4 zu dem Messwertgeber 2), direkt der Steigung der Kennlinie. Somit können Eigenschaftswert und Steigung der gleichen Kennlinie verwendet werden, um eine eindeutige Positionszuordnung zu erhalten.

Eine zweite Möglichkeit besteht darin, zwei Sensoreinheiten 3, 4 zu verwenden, die nicht genau entlang des Verschiebewegs angebracht sind. Somit ist die Differenz ihrer Ausgangssignale (bei bekanntem Abstand der Messsensoren) zumindest ähnlich der Steigung der Kennlinie, im Folgenden Pseudosteigung genannt. Damit können Eigenschaftswert und Pseudosteigung genutzt werden, um eine eindeutige Positionsbestimmung zu ermöglichen. Die Messpunkte beziehungsweise die Sensoreinheiten 3, 4 müssen somit nicht ganz genau in Verschieberichtung hintereinander angeordnet sein, sondern können beispielsweise auch zur Seite versetzt zueinander liegen.

Eine dritte Möglichkeit besteht darin, ein differentielles Messprinzip, wie vorstehend bereits angedeutet, anzuwenden. Damit wird an zwei Orten entlang des Verschiebewegs jeweils differentiell gemessen. Hierfür sind die in Verschieberichtung beabstandet zueinander angeordneten Sensoreinheiten 3, 4 notwendig. Letztendlich werden für diese Ausführungen mindestens drei Messwertsensoren benötigt, ein Messwertsensor kann prinzipiell doppelt genutzt werden. Es entspricht die Differenz der differentiellen Ausgangssignale (bei bekanntem Abstand der Messsensoren beziehungsweise Sensoreinheiten 3, 4 zu dem Messwertgeber 2) direkt der Steigung der Kennlinie. Somit kann der Eigenschaftswert und Steigung der gleichen Kennlinie verwendet werden, um eine eindeutige Positionszuordnung zu erhalten. Da es sich um ein rein differentielles Messprinzip handelt, ist es unempfindlich gegenüber externen, homogenen Störungen. Wichtig ist dabei, dass eine Messgröße von beiden Sensoreinheiten 3, 4 erfasst wird, aus welcher eine Differenzwertbildung ermöglicht ist. Vorzugsweise werden von den Sensoreinheiten jeweils zwei gleiche Messgrößen ermittelt, um miteinander vergleichbare Eigenschaftswerte zu erhalten, die durch differentielle Messung robust gegenüber externen Steuerfeldern gemacht werden.

Gemäß einer vierten Möglichkeit ist vorgesehen, dass ähnlich wie bei der dritten Möglichkeit differentiell gemessen wird, wobei jedoch die Sensoreinheiten 3, 4 sich nicht genau entlang des Weges befinden, sondern beispielsweise seitlich versetzt zueinander, sodass eine Pseudosteigung, wie zuvor bereits erläutert, ermittelt und für die Bestimmung der Position des Messwertgebers 2 verwendet wird. Durch das differentielle Messprinzip wird in diesem Fall die Robustheit gegenüber externen Störungen erhöht.

Gemäß einer fünften Möglichkeit werden erfingungsgemäß ein differentielles und ein absolutes Messprinzip kombiniert: Das primäre Ausgangssignal ist ein differentielles, welches durch zwei Messwertensensoren beziehungsweise Sensoreinheiten 3, 4 an zwei Orten differentiell erzeugt wird, wie vorstehend beschrieben. Zusätzlich wird bei zwei Messwertsensoren/Sensoreinheiten 3, 4 das absolute Messprinzip angewandt. Aus der Differenz dieser absolut gewonnen Signale erhält man die Steigung einer zweiten Kennlinie. In diesem Fall wird dann bevorzugt der Eigenschaftswert der differentiellen Messung mit der Steigung der absoluten Messung verglichen oder kombiniert, um eine eindeutige Positionsbestimmung zu gewährleisten. Dabei kann auch eine Fremdfeldrobustheit erreicht werden, wenn das differentielle Winkelsignal als primäre Positionsinformation genutzt wird, und sich das absolute Signal durch die Einwirkung eines maximal spezifizierten Fremdfeldes nur so geringfügig geändert, dass eine Zuordnung der Steigung noch eindeutig bleibt.

## Patentansprüche

1. Verfahren zum Betreiben eines Wegsensors (1), der einen Messwertgeber (2) und zumindest zwei dem Messwertgeber (2) zugeordnete Sensoreinheiten (3,4) aufweist, wobei der Messwertgeber (2) relativ zu den Sensoreinheiten (3,4) verlagerbar ist und eine sich entlang des Messwertgebers (2) zumindest einmal von einem Anfangswert bis zu einem Endwert verändernde Eigenschaft aufweist, die durch die Sensoreinheiten (3,4) erfassbar ist/erfasst wird, wobei die Sensoreinheiten (3,4) in Bewegungsrichtung beabstandet hintereinander angeordnet sind, wobei in Abhängigkeit der durch die Sensoreinheiten (3,4) erfassten Eigenschaftswerte der Eigenschaft die Position des Messwertgebers (2) bezüglich der Sensoreinheiten (3,4) bestimmt wird, wobei mittels der Sensoreinheiten (3,4) eine Steigung der Veränderung der Eigenschaft ermittelt wird, wobei der Messwertgeber (2) in Bewegungsrichtung gesehen zumindest zwei in Bewegungsrichtung hintereinanderliegende Abschnitte (I-V) aufweist, entlang welcher sich die Eigenschaft jeweils zumindest von dem Anfangswert bis zumindest dem Endwert verändert, wobei die Veränderung in den Abschnitten (I-V) unterschiedliche Steigungen aufweist, und wobei in Abhängigkeit von den erfassten Eigenschaftswerten und der ermittelten Steigung die Position des Messwertgebers (2) bestimmt wird, **dadurch gekennzeichnet, dass** gemäß einem differentiellen Messprinzip ein Eigenschaftswert erfasst wird, wobei bei dem differentiellen Messprinzip durch die Sensoreinheiten (3,4) ein differentielles Ausgangssignal einer gleichen Messgröße erzeugt wird, dass gemäß einem absoluten Messprinzip die Steigung ermittelt wird, wobei bei dem absoluten Messprinzip die Differenz der Ausgangssignale der Sensoreinheiten (3,4) der Steigung entspricht, und dass der Eigenschaftswert des differentiellen Messprinzips zur Gewährleistung einer eindeutigen Positionsbestimmung mit der Steigung des absoluten Messprinzips verglichen oder kombiniert wird.

2. Verfahren nach Anspruch 1, **dadurch gekennzeichnet, dass** die Eigenschaft magnetisch, induktiv oder kapazitiv erfasst wird.

3. Verfahren nach einem der vorhergehenden Ansprüche, **dadurch gekennzeichnet; dass** als Sensoreinheiten (3,4) magnetfeldempfindliche Sensoreinheiten (3,4) verwendet werden, die als Hall-Sensoren oder XMR-Sensoren ausgebildet sind.

## Claims

1. Method for operating a path sensor (1) that comprises a measurement value transducer (2) and at least two sensor units (3, 4) assigned to the measurement value transducer (2), wherein the measurement value transducer (2) is displaceable relative to the sensor units (3, 4) and has a property which changes at least once from a starting value to an end value along the measurement value transducer (2) and which is detectable/detected by the sensor units (3, 4), wherein the sensor units (3, 4) are arranged one after the other and spaced apart in the direction of movement, wherein the position of the measurement value transducer (2) in relation to the sensor units (3, 4) is determined depending on the property values of the property that are detected by the sensor units (3, 4), wherein a gradient of the change in the property is ascertained by means of the sensor units (3, 4), wherein, as viewed in the direction of movement, the measurement value transducer (2) has at least two sections (I-V) in succession in the direction of movement, along which sections the property changes in each case at least from the starting value to at least the end value, wherein the change has different gradients in the sections (I-V), and wherein the position of the measurement value transducer (2) is determined depending on the detected property values and the ascertained gradient, **characterized in that** a property value is detected in accordance with a differential measurement principle, wherein, in the case of the differential measurement principle, a differential output signal of an identical measurement variable is generated by the sensor units (3, 4), **in that** the gradient is ascertained in accordance with an absolute measurement principle, wherein, in the case of the absolute measurement principle, the difference between the output signals of the sensor units (3, 4) corresponds to the gradient, and **in that** the property value of the differential measurement principle is compared or combined with the gradient of the absolute measurement principle in order to ensure an unambiguous position determination.

2. Method according to Claim 1, **characterized in that** the property is detected magnetically, inductively or capacitively.

3. Method according to either of the preceding claims, **characterized in that** the sensor units (3, 4) used are magnetic-field-sensitive sensor units (3, 4) that are configured as Hall sensors or XMR sensors.

## Revendications

1. Procédé de fonctionnement d'un capteur de déplacement (1) qui comporte un transmetteur de valeur de mesure (2) et au moins deux unités de détection (3, 4) associées au transmetteur de valeur de mesure (2), le transmetteur de valeur de mesure (2) étant déplaçable par rapport aux unités de détection (3, 4) et présentant une propriété qui varie au moins une fois depuis une valeur initiale jusqu'à une valeur finale le long du transmetteur de valeur de mesure (2) et qui est détectable ou peut être détectée par les unités de détection (3,4), les unités de détection (3, 4) étant disposées à distance l'une derrière l'autre dans la direction de déplacement, la position du transmetteur de valeur de mesure (2) par rapport aux unités de détection (3, 4) étant déterminée en fonction des valeurs de la propriété qui sont détectées par les unités de détection (3, 4), la pente de la variation de la propriété étant déterminée au moyen des unités de détection (3, 4), le transmetteur de valeur de mesure (2) comportant, lorsqu'il est vu dans la direction de déplacement, au moins deux portions (I-V) situées l'une derrière l'autre dans la direction de déplacement, le long desquelles la propriété varie au moins de la valeur initiale à au moins la valeur finale, la variation dans les portions (I-V) comportant des pentes différentes, et la position du transmetteur de valeur de mesure (2) étant déterminée en fonction des valeurs de propriété détectées et de la pente déterminée, **caractérisé en ce qu'**une valeur de propriété est détectée selon un principe de mesure différentiel, un signal de sortie différentiel de la même grandeur de mesure étant généré par les unités de détection (3, 4) dans le principe de mesure différentiel, **en ce que** la pente est déterminée selon un principe de mesure absolu, la différence des signaux de sortie des unités de détection (3, 4) correspondant à la pente dans le principe de mesure absolu, et **en ce que** la valeur de propriété du principe de mesure différentiel est comparée ou combinée à la pente du principe de mesure absolu pour garantir la détermination univoque de la position.

2. Procédé selon la revendication 1, **caractérisé en ce que** la propriété est détectée par des moyens magnétiques, inductifs ou capacitifs.

3. Procédé selon l'une des revendications précédentes, **caractérisé en ce que** des unités de capteur (3, 4) sensibles au champ magnétique, qui sont conçues comme des capteurs à effet Hall ou des capteurs XMR, sont utilisées comme unités de capteur (3, 4).
